# EUROPÄISCHE PATENTSCHRIFT

(11) **EP 3 129 610 B1**
(45) Veröffentlichungstag und Bekanntmachung des Hinweises auf die Patenterteilung: **13.03.2019**
(21) Anmeldenummer: 15703547.8
(22) Anmeldetag: 30.01.2015
(51) Int. Cl.: F01K 7/16, F01K 23/10

(54) **VERFAHREN UND VORRICHTUNG ZUM SPEICHERN UND RÜCKGEWINNEN VON ENERGIE**
METHOD AND DEVICE FOR STORING AND RECOVERING ENERGY
PROCÉDÉ ET DISPOSITIF D'ACCUMULATION ET DE RÉCUPÉRATION D'ÉNERGIE

(30) Priorität: 11.04.2014 DE 102014105237
(43) Veröffentlichungstag der Anmeldung: 15.02.2017
(73) Patentinhaber: Mitsubishi Hitachi Power Systems Europe GmbH, 47059 Duisburg (DE)
(72) Erfinder: BERGINS, Christian, 46711 Datteln (DE); BUDDENBERG, Torsten, 47447 Moers (DE)
(74) Vertreter: Viering, Jentschura & Partner mbB Patent- und Rechtsanwälte
(86) Internationale Anmeldenummer: PCT/EP2015/051919
(87) Internationale Veröffentlichungsnummer: WO 2015/154894

(56) Entgegenhaltungen:
- AT-U1- 12 844
- US-A1- 2011 132 032
- US-A1- 2012 151 961

## Beschreibung

Die vorliegende Erfindung betrifft ein Verfahren zur Speicherung und Rückgewinnung von Energie, bei welchem in einem Energiespeicherzeitraum ein Luftverflüssigungsprodukt (LAIR) gebildet und in einem Energierückgewinnungszeitraum unter Verwendung zumindest eines Teils des Luftverflüssigungsproduktes (LAIR) ein Fluiddruckstrom gebildet und in mindestens einer Energiegewinnungsvorrichtung arbeitsleistend entspannt wird; wobei in dem Energiespeicherzeitraum das Luftverflüssigungsprodukt (LAIR) durch eine unter Energiezufuhr, insbesondere Stromzufuhr, betriebene Verdichtung von Luft in einer Luftkonditioniervorrichtung als flüssiges Medium gewonnen, gewünschtenfalls in kaltem Zustand in einer als Flüssigkeitsspeicher ausgebildeten Speichereinrichtung gespeichert und in dem Energierückgewinnungszeitraum einer Verdampfereinheit zugeführt wird und wobei das Luftverflüssigungsproduktes (LAIR) mindestens in dem Energierückgewinnungszeitraum nach einer Druckerhöhung als der Fluiddruckstrom in der mindestens einen Energiegewinnungsvorrichtung arbeitsleistend entspannt wird, wobei der Fluiddruckstrom in einer ersten Energiegewinnungsvorrichtung entspannt und stromaufwärts dieser ersten Energiegewinnungsvorrichtung durch eine Rekuperatorvorrichtung geleitet wird, in welcher in den Fluiddruckstrom aus einem der Rekuperatorvorrichtung zugeführten Rauchgasstrom ausgekoppelte Wärmeenergie eingekoppelt wird, wobei der Rauchgasstrom von einer brennstoffbefeuerten zweiten Energiegewinnungsvorrichtung der Rekuperatorvorrichtung zugeführt wird.

Weiterhin betrifft die Erfindung eine Vorrichtung, insbesondere zur Durchführung eines Verfahrens nach einem der Ansprüche 1 - 9, die zum Speichern und Rückgewinnen von Energie durch Bildung eines Luftverflüssigungsproduktes (LAIR) in einem Energiespeicherzeitraum und zum Erzeugen und arbeitsleistenden Entspannen eines unter Verwendung zumindest eines Teiles des Luftverflüssigungsprodukts (LAIR) gebildeten Fluiddruckstroms in einem Energierückgewinnungszeitraum eingerichtet ist, umfassend eine unter Energiezufuhr, insbesondere Stromzufuhr, betreibbare Luftkonditioniervorrichtung, mittels welcher das Luftverflüssigungsprodukt (LAIR) durch Verdichtung von Luft als flüssiges Medium erzeugbar ist, eine Luftverflüssigungsproduktspeichervorrichtung, eine das Luftverflüssigungsprodukt (LAIR) druckerhöhend zu dem Fluiddruckstrom verdichtende Fördervorrichtung und mindestens eine mit der Fördervorrichtung in Leitungsverbindung stehende und den Fluiddruckstrom arbeitsleistend entspannende Energiegewinnungsvorrichtung, wobei in der Leitungsverbindung in Strömungsrichtung des Fluiddruckstroms stromaufwärts einer ersten, von dem Fluiddruckstrom durchströmten Energiegewinnungsvorrichtung eine von dem Fluiddruckstrom durchströmte Rekuperatorvorrichtung angeordnet ist, in welcher in den Fluiddruckstrom aus einem der Rekuperatorvorrichtung zugeführten Rauchgasstrom ausgekoppelte Wärmeenergie einkoppelbar ist, wobei die Rekuperatorvorrichtung in einer den Rauchgasstrom zuführenden Leitungsverbindung mit einer brennstoffbefeuerten zweiten Energiegewinnungsvorrichtung steht.

Beispielsweise aus der DE 31 39 567 A1 und der EP 1 989 400 A1 ist bekannt, Flüssigluft oder Flüssigstickstoff, also tiefkalte Luftverflüssigungsprodukte, zur Netzregelung und zur Bereitstellung von Regelleistung in Stromnetzen zu verwenden.

Zu Billigstromzeiten oder Stromüberschusszeiten wird dabei Luft in einer Luftzerlegungsanlage mit einem integrierten Verflüssiger oder in einer dezidierten Verflüssigungsanlage, allgemein auch als Luftbehandlungseinheit bezeichnet, insgesamt oder teilweise zu einem derartigen Luftverflüssigungsprodukt verflüssigt. Das Luftverflüssigungsprodukt wird in einem Tanksystem mit Tieftemperaturtanks gespeichert. Dieser Betriebsmodus erfolgt in einem Zeitraum, der hier als Energiespeicherzeitraum bezeichnet wird.

Zu Spitzenlastzeiten wird das Luftverflüssigungsprodukt aus dem Tanksystem entnommen, mittels einer Pumpe druckerhöht und bis auf etwa Umgebungstemperatur oder höher angewärmt und damit in einen gasförmigen oder überkritischen Zustand überführt. Ein hierdurch erhaltener Druckstrom wird in einer Kraftwerkseinheit in einer Entspannungsturbine oder mehreren Entspannungsturbinen mit Zwischenerwärmung bis auf Umgebungsdruck entspannt. Die dabei freiwerdende mechanische Leistung wird in einem oder mehreren Generatoren der Kraftwerkseinheit in elektrische Energie umgewandelt und in ein elektrisches Netz eingespeist. Dieser Betriebsmodus erfolgt in einem Zeitraum, der hier als Energierückgewinnungszeitraum bezeichnet wird.

Die beim Überführen des Luftverflüssigungsprodukts in den gasförmigen oder überkritischen Zustand während des Energierückgewinnungszeitraums freiwerdende Kälte kann gespeichert und während des Energiespeicherzeitraums zur Bereitstellung von Kälte zur Gewinnung des Luftverflüssigungsprodukts eingesetzt werden.

Es sind auch Druckluftspeicherkraftwerke bekannt, in denen die Luft jedoch nicht verflüssigt, sondern in einem Verdichter verdichtet und in einer unterirdischen Kaverne gespeichert wird. In Zeiten hoher Stromnachfrage wird die Druckluft aus der Kaverne in die Brennkammer einer Gasturbine geleitet. Gleichzeitig wird der Gasturbine über eine Gasleitung Brennstoff, beispielsweise Erdgas, zugeführt und in der durch die Druckluft gebildeten Atmosphäre verbrannt. Das gebildete Abgas wird in der Gasturbine entspannt, wodurch Energie erzeugt wird.

Aus der DE 197 57 88 A1 ist ein Stromerzeugungssystem mit einer Gasturbine und einem Energiespeicher bekannt, das einen Speicherbehälter zum Speichern von flüssiger Luft, eine Verdampfungseinrichtung zum Verdampfen der in dem Speicherbehälter gespeicherten flüssigen Luft, eine Brennkammer zum Erzeugen eines Verbrennungsgases durch Verbrennen der durch die Verdampfungseinrichtung verdampften Luft und von Brennstoff sowie weiterhin eine Gasturbine, die von dem in der Brennkammer erzeugten Verbrennungsgas angetrieben wird und einen Gasturbinengenerator, der mit der Gasturbine zur Erzeugung von elektrischem Strom verbunden ist, umfasst. Zur Zuführung der flüssigen Luft zu der Verdampfungseinrichtung ist eine Druckerhöhungseinheit vorgesehen, mittels welcher die in dem Speicherbehälter gespeicherte flüssige Luft auf einen Druck gebracht wird, der höher ist als der Druck der Luft die der Brennkammer zugeführt wird. Weiter umfasst das System eine Expansionsturbine, die durch expandieren der durch die Verdampfungseinrichtung verdampften Luft angetrieben wird, und einen Expansionsturbinen-Generator, der mit der Expansionsturbine zur Erzeugung von Strom verbunden ist.

Eine Kombination einer Gasturbine mit einer mittels expandierendem Luftverflüssigungsprodukt stromerzeugenden Energiegewinnungsanlage ist aus der US 3,631,673 A bekannt.

Die Möglichkeit, Luft zu verflüssigen und als Luftverflüssigungsprodukt in einem Tank zu speichern, von welchem es später einer stromerzeugenden Expansionstufe zugeführt wird, ist aus der US 2011/0132032 A1 bekannt.

Die vorliegende Erfindung ist auch von Verfahren und Vorrichtungen zu unterscheiden, bei denen ein sauerstoffreiches Fluid zur Unterstützung von Oxidationsreaktionen in eine Gasturbine eingeleitet wird. Entsprechende Verfahren und Vorrichtungen arbeiten grundsätzlich mit Luftverflüssigungsprodukten, welche (deutlich) mehr als 40 Molprozent Sauerstoff enthalten.

Ein gattungsgemäßes Verfahren ist aus der AT 012 844 U1 bekannt. Bei diesem Verfahren wird eine einem Gasmotor zugeordnete Energieumwandlungsvorrichtung nach einem organischen Kreisprozess nach Rankine betrieben, wobei der Energieumwandlungsvorrichtung zur Verdampfung eines wenigstens zweiphasigen Arbeitsmediums eine Abwärme des Gasmotors zugeführt wird und der Energieumwandlungsvorrichtung zur Kondensation des Arbeitsmediums verflüssigte Kaltluft aus einer Flüssigluftspeichervorrichtung zugeführt wird.

Die Kombination einer Gasturbine mit der Nutzung von einem Luftverflüssigungsprodukt, wobei ein Wärmetausch zwischen dem Abgas der Gasturbine und dem Luftverflüssigungsprodukt stattfindet und sowohl mit dem Luftverflüssigungsprodukt in einer Entspannungsstufe ein Generator zur Stromerzeugung als auch mittels der Gasturbine ein Generator zur Stromerzeugung betrieben wird, sowie ein gattungsgemäßes Verfahren sind aus der US 2012/0151961 A1 bekannt.

Die Wirtschaftlichkeit entsprechender Verfahren und Vorrichtungen wird stark vom Gesamtwirkungsgrad beeinflusst.

Der Erfindung liegt daher die Aufgabe zugrunde, entsprechende Verfahren und Vorrichtungen in dieser Hinsicht zu verbessern.

Weiterhin liegt der Erfindung die Aufgabe zugrunde, eine Lösung zu schaffen, mit der auch bestehende Gas- und Dampf-Kraftwerke oder offene Gasturbinen mit einer Energiespeicherung auszustatten sind.

Die vorstehenden Aufgaben werden mit einem Verfahren gemäß Anspruch 1 und einer Vorrichtung gemäß Anspruch 10 gelöst. Vorteilhafte und zweckmäßige Ausgestaltungen der Erfindung sind Gegenstand der jeweiligen Unteransprüche.

Zur Lösung der vorstehenden Aufgabe schlägt die Erfindung ein Verfahren vor, bei welchem der Fluiddruckstrom, insbesondere Luftstrom, in einer ersten Energiegewinnungsvorrichtung entspannt und stromaufwärts dieser ersten Energiegewinnungsvorrichtung durch eine Rekuperatorvorrichtung, insbesondere einen Abhitzekessel, geleitet wird, in welcher in den Fluiddruckstrom aus einem der Rekuperatorvorrichtung, insbesondere dem Abhitzekessel, zugeführten Rauchgasstrom ausgekoppelte Wärmeenergie eingekoppelt wird, wobei der Rauchgasstrom von einer brennstoffbefeuerten zweiten Energiegewinnungsvorrichtung, insbesondere einer Gasturbine, der Rekuperatorvorrichtung, insbesondere dem Abhitzekessel, zugeführt wird und wobei der Fluiddruckstrom in einer ersten Entspannungsstufe der ersten Energiegewinnungsvorrichtung auf einen Druck von ≥ 10 bar entspannt, dann ein Teilstrom abgezweigt und der brennstoffbefeuerten zweiten Energiegewinnungsvorrichtung zugeführt wird.

Ebenso schlägt die Erfindung zur Lösung der vorstehenden Aufgaben eine Vorrichtung, insbesondere zur Durchführung eines Verfahrens nach einem der Ansprüche 1 bis 9 vor, bei welcher die in der Leitungsverbindung in Strömungsrichtung des Fluiddruckstroms stromaufwärts einer ersten, von dem Fluiddruckstrom durchströmten Energiegewinnungsvorrichtung eine von dem Fluiddruckstrom durchströmte Rekuperatorvorrichtung, insbesondere ein Abhitzekessel, angeordnet ist, in welcher/welchem in den Fluiddruckstrom aus einem der Rekuperatorvorrichtung, insbesondere dem Abhitzekessel, zugeführten Rauchgasstrom ausgekoppelte Wärmeenergie einkoppelbar ist, wobei die Rekuperatorvorrichtung, insbesondere der Abhitzekessel, in einer den Rauchgasstrom zuführenden Leitungsverbindung mit einer brennstoffbefeuerten zweiten Energiegewinnungsvorrichtung, insbesondere einer Gasturbine, steht und wobei die erste und die zweite Energiegewinnungsvorrichtung in einen Teilstrom des Fluiddruckstroms von der ersten Energiegewinnungsvorrichtung zu der brennstoffbefeuerten zweiten Energiegewinnungsvorrichtung zuführender Leitungsverbindung miteinander stehen.

Die erfindungsgemäße Vorrichtung zeichnet sich dadurch aus, dass die erste und die zweite Energiegewinnungsvorrichtung in einen Teilstrom des Fluiddruckstroms zuführender Leitungsverbindung miteinander stehen.

Die Erfindung betrifft somit die Technologie des Liquid Air Energy Storage (LAES), bei der Strom verwendet wird, um flüssige Luft herzustellen und zu speichern. Die flüssige Luft kann dann später bei (hohem) Strombedarf mit einer Pumpe energetisch effizient auf hohen Druck gebracht werden und dann nach Erhitzung in einer Energiegewinnungseinrichtung entspannt werden.

Mit der Erfindung ist es nun möglich, auch bestehende Gas- und Dampf-Kraftwerke, die eine Gasturbine als mindestens eine Energiegewinnungsvorrichtung aufweisen, mit einer Energiespeicherung eines Luftverflüssigungsproduktes auszustatten und zu ergänzen. Hierdurch lässt sich ein höherer Wirkungsgrad bei akzeptablen Investitionskosten erreichen. Aber auch für Neukonstruktionen ist die Erfindung unter dem Gesichtspunkt der Wirkungsgradverbesserung von Vorteil.

Zur Erreichung dieser Ziele schlägt die Erfindung vor, neben einer brennstoffbefeuerten (zweiten) Energiegewinnungsvorrichtung eine von dem durch Verdampfen des Luftverflüssigungsproduktes gewonnenen Fluiddruckstrom durchströmte und dort entspannte erste Energiegewinnungsvorrichtung vorzusehen und hierbei den der ersten Energiegewinnungsvorrichtung zugeführten Fluiddruckstrom und den aus der brennstoffbefeuerten zweiten Energiegewinnungsvorrichtung stammenden Rauchgasstrom in einem Rekuperator oder Abhitzekessel derart wärmetechnisch miteinander zu verkoppeln, dass aus dem Rauchgasstrom ausgekoppelte Wärmeenergie in den Fluiddruckstrom eingekoppelt wird. Dadurch ist es möglich, den in diesem Bereich bei Umgebungstemperatur einen Druck von 40 bis 100 bar aufweisenden Fluiddruckstrom auf eine Temperatur von > 400°C, insbesondere > 450°C und insbesondere auf eine Temperatur von 500°C, aufzuheizen.

Die Erfindung sieht daher in Ausgestaltung des Verfahrens vor, dass der Fluiddruckstrom dem Rekuperator mit einem Druck von 30 - 100 bar, vorzugsweise 55 - 75 bar, zugeführt und dort mittels der eingekoppellen Wärmeenergie auf eine Temperatur von > 400 °C, insbesondere > 450 °C, erwärmt wird.

Vor Ausstattung eines Gas- und Dampfkraftwerks mit dem erfindungsgemäßen Verfahren und der erfindungsgemäßen Vorrichtung kann eine solche Kraftwerksanlage zunächst als "normales" Gas- und Dampfkraftwerk oder als Spitzenlastkraftwerk betrieben werden. Es ist aber auch möglich, selbst wenn die Energiespeichervorrichtungen mit der Luftverflüssigung vorhanden sind, diese nicht zu betreiben, sondern schließlich die brennstoffbefeuerte (zweite) Energiegewinnungsvorrichtung, insbesondere eine Gasturbine, zu betreiben. In diesem Fall wird der Rekuperator oder Abhitzekessel nicht zur Erwärmung des Fluiddruckstromes verwendet. Wenn der Energiespeicherteil aber eingeschaltet wird, steht sofort zusätzliche Ausgangsleistung zur Verfügung, wenn verflüssigte Luft in einer Luftverflüssigungsproduktspeichervorrichtung bereitgehalten wird. Eine solche Luftverflüssigungsproduktspeichervorrichtung, insbesondere ein flüssige Luft speichernder Tank, ermöglicht zudem die Absorption überflüssiger Strommengen aus dem Netz, wenn die zugeordnete Luftkonditioniervorrichtung und insbesondere die die luftverflüssigende Luftverdichtungsvorrichtung mit Überschussstrom aus dem Netz betrieben werden. Hier wird zudem auch die Möglichkeit geschaffen, Power to Gas- oder Power to Fuel-Anlagen zu betreiben, welche den beispielsweise aus Erzeugung mittels erneuerbarer Energien stammenden Überschussstrom aus dem Netz zu nehmen und in Form von Wasser und/oder kohlenstoffhaltigem Brennstoff zu speichern.

Aufgrund der erfindungsgemäßen Ausgestaltung können in allen Prozessvarianten Gasturbinen verwendet werden, die gegenüber bekannten Serienmaschinen nur geringfügig modifiziert werden müssen. Die außerdem notwendigen Luftexpander, d. h. die die Entspannungsstufe, insbesondere eine Entspannungsturbine der ersten Energiegewinnungsvorrichtung ausbildende Entspannungseinheit, sind auch als Derivate bekannter, im Markt erhältlicher Dampfturbinen verfügbar oder ohne großen Aufwand problemlos aus diesen herzustellen. Ebenso ist es möglich, den erfindungsgemäß vorgesehenen Rekuperator oder Abhitzekessel durch geringfügige Anpassung von im Zusammenhang mit Gas- und Dampfkraftwerken bekannten Abhitzekesseln zu modifizieren.

Bei Drücken des Fluiddruckstromes von 50 bar bis zu 80 bar und Eintrittstemperaturen des Fluiddruckstromes in die entspannende erste Energiegewinnungsvorrichtung, insbesondere deren Entspannungsstufe, von 450°C bis zu 550°C sind Speicherwirkungsgrade mit Hilfe der Kältespeicherung und Verflüssigung der Luft von über 50 % möglich. Werden zudem noch weitere Maßnahmen, wie die Zuführung zusätzlicher Kälte aus Fremdprozessen oder die Drucklufteinleitung in die brennstoffbefeuerte zweite Energiegewinnungsvorrichtung, insbesondere Gasturbine, vorgesehen, so lassen sich die Wirkungsgrade auf 55 bis 65 % steigern. Wird zudem die bei der Luftverdichtung in der Luftverdichtervorrichtung oder Luftverdichteranlage entstehende Abwärme in ein Fernwärmenetz eingespeist oder in ein Prozesswärmenetz eingespeist und somit einer Verwendung an einem anderen Ort zugeführt, so sind auf den Brennstoff bezogene Ausnutzungsgrade (Fuel Efficiency bei der Ausspeicherung von Energie) von über 80 %, im Einzelfall sogar bis 100 %, möglich.

Auch lässt sich mit der Erfindung die Kombination einer chemischen Energiespeicherung mit einer Flüssigluftspeicherung (Liquid Air Energy Storage = LAES) vorteilhaft realisieren, wenn am Ort der LAES-Anlage eine Anlage betrieben wird, die unter der Umwandlung von CO₂ mit vorzugsweise aus einer Elektrolyse stammendem Wasserstoff die Herstellung von Methan, Methanol oder Demethylester ermöglicht, welche Produkte dann als Brennstoff der brennstoffbefeuerten zweiten Energiegewinnungsvorrichtung zugeführt werden.

In Ausgestaltung sieht die Erfindung vor, dass der Fluiddruckstrom in mindestens einer Entspannungsstufe, insbesondere einer ersten Entspannungsturbine, der ersten Energiegewinnungsvorrichtung auf einen Druck von ≤ 0,2 bar entspannt wird. Vorzugsweise wird der entspannte Fluiddruckstrom an die Umgebung abgegeben.

Hierbei ist es von Vorteil, wenn der Fluiddruckstrom erfindungsgemäß in einer ersten Entspannungsstufe, insbesondere der ersten Entspannungsturbine, der ersten Energiegewinnungsvorrichtung auf den Druck von ≥ 10 bai, vorzugsweise einen Druck zwischen 10 bar und 25 bar, entspannt, dann der Teilstrom abgezweigt und der brennstoffbefeuerten zweiten Energiegewinnungsvorrichtung, insbesondere deren Brennkammer, zugeführt wird.

Eine weitere zweckmäßig und vorteilhafte Kopplung zwischen erster Energiegewinnungsvorrichtung und zweiter Energiegewinnungsvorrichtung ergibt sich in Ausgestaltung der Erfindung auch dadurch, dass der Fluiddruckstrom in der ersten Entspannungsstufe, insbesondere einer ersten Entspannungsturbine, der ersten Energiegewinnungsvorrichtung auf einen Druck von ≥ 10 bar, vorzugsweise ≥ 14 bar, entspannt wird, dann der Teilstrom abgezweigt und der brennstoffbefeuerten zweiten Energiegewinnungsvorrichtung, insbesondere deren Brennkammer, zugeführt und der verbleibende Restteilstrom einer dritten Entspannungsstufe, insbesondere einer dritten Entspannungsturbine, der ersten Energiegewinnungsvorrichtung zugeführt wird.

Bei einer solchen Kopplung von erster Energiegewinnungsvorrichtung und brennstoffbefeuerter zweiter Energiegewinnungsvorrichtung ist es zudem zweckmäßig, den der brennstoffbefeuerten zweiten Energiegewinnungsvorrichtung von der ersten Energiegewinnungsvorrichtung her zugeführten Teilstrom des Fluiddruckstromes an den der zweiten Energiegewinnungsvorrichtung zugeführten Massestrom an Luft anzupassen. Die Erfindung zeichnet sich daher weiterhin dadurch aus, dass der der zweiten Energiegewinnungsvorrichtung, insbesondere einer Brennkammer der brennstoffbefeuerten zweiten Energiegewinnungsvorrichtung, zugeführte Teilstrom des Fluiddruckstroms 2 - 40 % , vorzugsweise 5 - 15 %, des Massenstromes an Luft entspricht, der beim Betrieb der zweiten Energiegewinnungsvorrichtung, insbesondere der Gasturbine, durch mindestens eine Verdichterstufe, insbesondere eine Verdichterturbine, der zweiten Energiegewinnungsvorrichtung verdichtet wird.

Die der brennstoffbefeuerten zweiten Energiegewinnungsvorrichtung, insbesondere der Gasturbine, zugeführte Luft und/oder der zugeführte Fluiddruckstrom kann/können hier einer Verdichtungsstufe oder einem Verdichter oder insbesondere einer Verdichtungsturbine, zugeführt weiden, es ist aber auch möglich, den vorstehend angegebenen Massenstromanteil der Luft und/oder den Fluiddruckstrom der brennstoffbefeuerten zweiten Energiegewinnungsvorrichtung, insbesondere Gasturbine, zur Wellen- und Schaufelkühlung zuzuführen.

Der nach einer Teil-Entspannung der ersten Entspannungsstufe, insbesondere der ersten Entspannungsturbine, der ersten Energiegewinnungsvorrichtung entnommene und der zweiten Energiegewinnungsvorrichtung zugeführte Teilstrom des Fluiddruckstroms verlässt die erste Energiegewinnungsvorrichtung vorzugsweise mit einer Temperatur im Bereich von 150°C bis 450°C, insbesondere von 300°C bis 400°C.

Die brennstoffbefeuerte zweite Energiegewinnungsvorrichtung kann als Zweiwellengasturbine ausgebildet sein, welcher der von der ersten Energiegewinnungsvorrichtung stammende Teilstrom des Fluiddruckstromes zugeführt wird, wobei in der Zweiwellengasturbine die Wellendrehzahlen unabhängig voneinander regelbar sind und zumindest eine Welle drehzahlregelbar ausgebildet ist.

Bei dem Rekuperator oder Abhitzekessel kann es sich um einen Röhrenwärmetauscher handeln, in welchem der zugeführte Rauchgasstrom in einer oder mehreren Stufen die Restwärme an den zuströmenden, kalten Fluiddruckstrom abgibt, wobei der kalte Fluiddruckstrom innerhalb der Röhren des Röhrenwärmetauschers geführt wird. Es ist aber auch möglich, die Wärmeauskopplung aus dem Rauchgasstrom in einem Rekuperator oder Abhitzekessel vorzunehmen, der als eine oder mehrere Stufen umfassender Plattenwärmetauscher ausgebildet ist, wobei der Abhitzekessel den zugeführten kalten Fluiddruckstrom abgibt. Auch hier ist der Fluiddruckstrom innerhalb des Plattenwärmetauschers bzw. dessen Röhren geführt. Natürlich ist auch die Ausbildung zweier oder mehrerer Rekuperatoren/Abhitzekessel möglich. Der oder die Rekuperator(en)/Abhitzekessel umfassen vorzugsweise eine oder mehrere Wärmetauscherstufen, deren Rohre oder Platten aus einem austenitischen Material bestehen. Hierbei können die Platten- oder Wärmetauscher - zumindest teilweise - als außenberippte Rohre ausgebildet sein. Da der Rekuperator/Abhitzekessel prinzipiell so aufgebaut sein kann, wie dies Abhitzekessel oder Rekuperatoren von Gas- und Dampf-Kraftwerken sind, durch welche bei diesen das Abgas oder Rauchgas der Gasturbine geführt wird, kann hier auch vorgesehen sein, dass die Wärmetauschereinrichtungen horizontal oder vertikal angeordnet sind. Auch ist es möglich, zur Aufheizung des Fluiddruckstromes Wärmetauscherflächen vorzusehen, denen zur Wärmezufuhr an den Fluiddruckstrom Dampf und/oder Heißwasser aus einer zugeordneten weiteren (parallelen) Energieerzeugungsanlage oder einem Speicher zugeführt wird.

Insbesondere sind solche Anlagen dann aber wie von konventionellen Gas- und Dampfkraftwerken bekannt, gleichzeitig mit einem Katalysator ausgestattet, der eine Entstickung des durch den Wärmetauscher, d.h. den Rekuperator/Abhitzekessel geleiteten Rauchgasstromes bewirkt. Hierbei ist dann der Wärmetauscher bzw. Rekuperator/Abhitzekessel zumindest zweistufig ausgeführt und zwischen den Stufen eine Einrichtung zur Entstickung des Rauchgasstromes mittels eines Katalysators und beispielsweise Ammoniak oder Ammoniakwasser angeordnet. Die Erfindung zeichnet sich in Weiterbildung auch dadurch aus, dass der Rauchgasstrom durch eine eine Entstickung bewirkende Rekuperatorvorrichtung, insbesondere einen Abhitzekessel, geleitet wird. Die Erfindung zeichnet sich in Ausgestaltung des Verfahrens zudem dadurch aus, dass dem der Rekuperatorvorrichtung zugeführten Rauchgasstrom vor Eintritt in die Rekuperatorvorrichtung ein Umgebungstemperatur aufweisender Frischluftstrom in einer solchen Menge zugeführt, dass der Rauchgasstrom vor Eintritt in die Rekuperatorvorrichtung auf eine Temperatur zwischen 250°C und 500°C, insbesondere zwischen 310°C und 430°C, gekühlt wird. Außerdem ist es dabei zweckmäßig, ergänzend oder alternativ auch mittels einer Wasserbespritzung eine Kühlung des Rauchgasstromes zu erzeugen. Die Erfindung zeichnet sich daher weiterhin dadurch aus, dass der Rauchgasstrom vor Eintritt in die Rekuperatorvorrichtung mittels einer Wassereinspritzung auf eine Temperatur von 250°C bis 500°C, insbesondere zwischen 310°C und 430°C, gekühlt wird.

Hierdurch wird das Problem gelöst, dass bei einem Gasturbinen-LAES-Kombikraftwerk während des alleinigen Betriebes des Gasturbinensystems im Gasturbinenmodus des Kombikraftwerkes der Rauchgasstrom der brennstoffbefeuerten zweiten Energiegewinnungsvorrichtung, insbesondere einer Gasturbine, in der Rekuperatorvorrichtung nicht durch den ebenfalls durch die Rekuperatorvorrichtung geführten Fluiddruckstrom gekühlt wird. Damit hätte das Rauchgas dann aber beim Eintritt in die innerhalb der Rekuperatorvorrichtung ausgebildete katalytische Entstickungseinrichtung oder Entstickungsvorrichtung mit ca. 510 °C bis 550 °C eine Temperatur, die für den Betrieb einer katalytischen Entstickungstemperatur zu hoch ist. Solche katalytischen Entstickungsvorrichtungen, die eine selektive katalytische Reduktion (selective catalytic reduction "SCR") ermöglichen, benötigen aber ein Temperaturfenster, dass im Bereich von 310 °C und 430 °C liegt. Oberhalb dieses Temperaturfensters beginnt der in der jeweiligen Entstickungsvorrichtung vorhandene Katalysator an zu sintern, unterhalb dieses Temperaturfensters wird die katalytische Reaktion der Stickoxide zu langsam, um im Rahmen der üblichen Verweilzeit eine Entstickung des Rauchgasstromes ausreichend zu bewirken.

Hier kann vorgesehen sein, dass der aus der brennstoffbefeuerten zweiten Energiegewinnungsvorrichtung, insbesondere der/einer Gasturbine, stammende Rauchgasstrom, insbesondere mittels eines zusätzlichen Frischlüfters mit Umgebungsluft beaufschlagt wird, d.h. eine Mischtemperatur erreicht wird, die im zulässigen Temperaturbereich/Temperaturfenster für den Betrieb eines SCR-Katalysators liegt. Dieser zusätzliche Luftstrom wird mit einem Massenstrom zugeführt, der abhängig von der Austrittstemperatur des Rauchgasstromes aus der zweiten Energiegewinnungsvorrichtung bei etwa 40 Gew.-% des Rauchgasmassestromes liegt. Hierbei kann es vorgesehen sein, dass die Zumischung der kalten Umgebungsluft im vorhandenen Rauchgasweg mittels unbenutzter Rekuperatorheizflächen erfolgt. Es ist aber auch möglich, einen separaten Rauchgasweg vorzusehen und auszubilden, der ausschließlich für diesen Betriebsfall des Gasturbinen-Modus ausgelegt ist und dann von dem Rauchgasstrom durchströmt wird. Eine weitere Möglichkeit besteht darin, an dem vorhandenen Rauchgasweg optional zuschaltbare Bypasskanäle zu installieren, die damit den von dem Rauchgasstrom durchströmbaren Querschnitt vergrößern und somit die Rauchgasströmungsgeschwindigkeit und den Druckverlust senken. Die Bypasskanäle können aber insbesondere auch zur Umfahrung der Rekuperatorheizflächen vorgesehen sein, da diese Heizflächen den geringsten Strömungsquerschnitt im LAES-Modus des Kraftwerkes, bei welchem sowohl die Flüssigluftspeicherung als auch die Gasturbine betrieben wird, darstellen.

Alternativ kann in Ausgestaltung auch vorgesehen sein, dass der Rauchgasstrom mittels einer Wassereinspritzung vor Erreichen der Katalysatorfläche oder Katalysatoreinrichtung gekühlt wird. Eine solche Lösung kann es eventuell notwendig machen, dass dann auch nach dem Durchströmen der Katalysatoreinrichtung oder -vorrichtung noch Wasser eingespritzt werden muss, um die Rauchgastemperatur weiter abzusenken und solche Bedingungen abgasseitig der Rekuperatorvorrichtung einzustellen, wie sie auch bei einem LAES-Betrieb erreicht werden, in welchem der kalte Fluiddruckstrom durch die Rekuperatorvorrichtung geleitet wird.

Bei einer mit einer Entstickungsvorrichtung ausgestatteten Rekuperatorvorrichtung kann zudem vorgesehen sein, auch in der zweiten Energiegewinnungseinrichtung bereits Maßnahmen vorzusehen, die zu einer Temperaturabsenkung des Rauchgasstroms führen. Hier ist es beispielsweise möglich, den Luftverdichter oder die Luftverdichtungsvorrichtung der Luftverflüssigungsanlage zu betreiben und die dabei erzeugte komprimierte Luft zur Kühlung der Heizflächen in dem Rekuperator zu verwenden, der in Strömungsrichtung des Rauchgases vor der Entstickungseinrichtung in der Rekuperatorvorrichtung angeordnet sind. Die hierbei erzeugt verdichtete Luft kann dann auf eine Entspannungsstufe oder Entspannungsturbine einer Energiegewinnungsvorrichtung geführt und zur Stromerzeugung genutzt werden. Es ist aber auch möglich, den Rauchgasstrom mittels einer zusätzlichen und/oder vorhandenen Heizfläche der Rekuperatorvorrichtung abzukühlen, indem diese zusätzliche/vorhandene Heizfläche mit einem Fluid durchströmt wird, welches anschließen zur Aufladung eines thermischen Speichers verwendet wird. Da ein thermischer Speicher immer eine begrenzte Kapazität aufweist und die Dauer des Gasturbinen-Modus des Kraftwerks bezüglich seiner Dauer variabel gestaltet werden muss, ist dann die Möglichkeit vorzusehen, die aus dem Rauchgasstrom abgeführte Wärmemenge mittels eines weiteren Wärmeaustauschvorganges an die Umgebung abzuführen. Der thermische Speicher kann dabei sowohl ein gasförmiges als auch ein flüssiges oder festes Speichermedium enthalten. Die eingespeicherte Wärme kann anschließend dazu genutzt werden, im reinen LAES-Modus, d.h. ohne Gasturbinenbetrieb, die gespeicherte flüssige Luft in Form des Fluiddruckstromes vor der Entspannung in einer Entspannungsstufe der ersten Energiegewinnungsvorrichtung vorzuwärmen, falls beispielsweise die zweite Energiegewinnungseinrichtung nicht betrieben werden sollte.

Insgesamt ist es also möglich, eine erfindungsgemäße Vorrichtung einmal mit dem erfindungsgemäßen Verfahren zu betreiben, bei welchem die eingespeicherte cryogene und flüssige Luft mit einer Pumpe komprimiert und in einer Verdampfereinheit verdampft wird. Der sich danach einstellende Fluiddruckstrom (etwa 60 bar) besitzt dann eine Temperatur nahe der Umgebungstemperatur (20 °C). Da bei dieser Fahrweise im LAES-Mode zudem die brennstoffbefeuerte zweite Energiegewinnungsvorrichtung, insbesondere Gasturbine, ebenfalls in Betrieb ist, wird dann die Abwärme des Rauchgasstromes dazu genutzt, die in Form des Fluiddruckstromes aus einem Flüssigluftspeicher, d.h. einer Speichereinrichtung, stammende Luft auf eine Temperatur zu erwärmen, die nahe der Temperatur des Rauchgasstromes liegt. Der derart vorgewärmte Fluiddruckstrom wird dann in einer in Strömungsrichtung nachgeschalteten Entspannungsstufe der ersten Energiegewinnungsvorrichtung entspannt. In diesem LAES-Mode werden somit die erste und die zweite Energiegewinnungsvorrichtung parallel betrieben und zur Stromproduktion genutzt. Bei einer Fahrweise im GT(Gasturbine)-Mode, bei welcher lediglich die zweite Energiegewinnungsvorrichtung in Betrieb ist, wird die Stromgewinnung allein mit dieser zweiten Energiegewinnungsvorrichtung betrieben.

Die die Verdichtungseinrichtung sowie die Verflüssigungseinheit und die Verdampfereinheit umfassende Luftkonditioniervorrichtung kann vorzugsweise an das Fernwärmenetz oder ein Prozesswärmenetz angeschlossen sein. In diesem Falle wird dann die aus der Luftverdichtung (Verdichtungseinrichtung) und/oder Verflüssigungseinheit stammende Wärme einem Fernwärmenetz oder einem Prozesswärmenetz zugeführt. Die Erfindung zeichnet sich daher in Weiterbildung dadurch aus, dass die bei der Verdichtung von Luft in der Luftkonditioniervorrichtung entstehende Verdichtungsabwärme gespeichert und/oder als Fernwärme und/oder als Prozesswärme zur Verfügung gestellt wird. Es ist aber auch möglich, zumindest einen Teil dieser gespeicherten Verdichtungsabwärme später als Prozesswärme der Verdampfereinheit und/oder dem Fluiddruckstrom vor dessen Eintritt in die Rekuperatorvorrichtung zur Verdampfung und/oder Erhitzung/Erwärmung des Luftverflüssigungsproduktes zuzuführen. Allerdings kann die für die Verdampfung und/oder Erhitzung/Erwärmung des Luftverflüssigungsproduktes notwendige Energie auch aus einer parallelen Energieerzeugungsanlage stammen.

Auch sieht die Erfindung in Ausgestaltung vor, dass aus dem die erste Energiegewinnungsvorrichtung verlassenden Abluftstrom und/oder dem die Rekuperatorvorrichtung verlassenden Rauchgasstrom Wärmeenergie ausgekoppelt und als Fernwärme und/oder Prozesswärme zur Verfügung gestellt wird.

Auf der Verflüssigungsseite der erfindungsgemäßen Vorrichtung oder Anlage kann vorgesehen sein, dass der Verflüssigungseinheit Überschusskälte aus Fremdprozessen, also nicht mit dem erfindungsgemäßen Verfahren unmittelbar in Verbindung stehenden Prozessen zugeführt wird. Ein solcher Fremdprozess kann die Verdampfung von Erdgas oder Liquid Natural Gas sein. Die Erfindung zeichnet sich daher in Weiterbildung dadurch aus, dass der eine Verflüssigungseinheit, eine Verdampfereinheit und vorzugsweise einen Kältespeicher umfassenden Luftkonditioniervorrichtung bei anderen Verdampfungsprozessen entstehende Kälte, insbesondere aus der Verdampfung von Erdgas oder Liquid Natural Gas stammende Kälte, zugeführt wird.

Die brennstoffbefeuerte zweite Energiegewinnungsvorrichtung kann mit verschiedensten Brennstoffen befeuert werden. Hierbei kann es sich um Brennstoff handeln, dessen Erzeugung auf der Speicherung von Strom in chemischer Energie beruht, der also synthetisch hergestellt ist. Hierbei kann es sich um aus einer Elektrolyse stammenden Wasserstoff, aus einer Power to Gas-Anlage stammendes Methan, wobei in der Power to Gas-Anlage aus einer Elektrolyse stammender Wasserstoff mit vorzugsweise aus einem Rauchgas stammendem CO₂ zudem Methan umgesetzt wird, oder um Dimethylether (DME) handeln. Vorzugsweise haben diese synthetischen Brennstoffe einen Anteil, der der in der flüssigen Luft, d. h. dem Fluiddruckstrom, gespeicherten Energie im Verhältnis zur gesamten der Gasturbine zugeführten Brennstoffmenge entspricht. Die Energie (Reaktionsenergie) des Brennstoffes der zweiten Energiegewinnungsvorrichtung kann aus nuklearer Energie oder erneuerbarer Energie, z. B. Geothermie, Fotovoltaik, Solarthermie (CSP), Windenergie oder Biomasse, stammen. Insbesondere können die Kohlenstoffatome des Brennstoffs bei der Energiespeicherung aus energetisch recycelten fossilen Brennstoffen oder dem daraus bei deren Verbrennung bzw. Oxidation sich bildenden CO₂ stammen.

Am Ort der erfindungsgemäßen Vorrichtung mit einer Energiespeicheranlage mittels verflüssigter Luft kann zusätzlich eine chemische Energiespeicheranlage installiert sein, die Energie mittels Elektrolyse und/oder Power to Gas und/oder Power to Fuel speichert und wobei dieser gespeicherte Brennstoff dann teilweise oder in Gänze den Brennstoff der brennstoffbefeuerten zweiten Energiegewinnungsvorrichtung darstellt.

Wie vorstehend bereits erwähnt, kann zur Optimierung des energetischen Wirkungsgrades einer erfindungsgemäßen Vorrichtung zur Durchführung eines erfindungsgemäßen Verfahrens insbesondere nach einem oder mehreren der Ansprüche 1 - 9, also einer Energiespeicheranlage oder Energiespeichervorrichtung, die in dem Rauchgasstrom in Strömungsrichtung nach der Rekuperatorvorrichtung und die in der sich nach der Entspannung des Fluiddruckstromes in der ersten Energiegewinnungsvorrichtung bildenden Abluft vorhandene Wärmeenergie oder auch die bei der Herstellung von speicherbaren Brennstoffen vorhandene Abwärmeenergie für die Bereitstellung von Prozesswärme oder Fernwärme genutzt werden.

In Weiterbildung sieht die Erfindung vor, dass die erste Energiegewinnungsvorrichtung und/oder die brennstoffbefeuerte zweite Energiegewinnungsvorrichtung, insbesondere die/eine Gasturbine, als Generatorturbine ausgebildet ist/sind.

Hierbei ist vorteilhafterweise zudem vorgesehen, dass die erste Energiegewinnungsvorrichtung und/oder die brennstoffbefeuerte zweite Energiegewinnungsvorrichtung, insbesondere die/eine Gasturbine, mindestens eine den zugeführten Fluiddruckstrom entspannende Entspannungsstufe, insbesondere eine Entspannungsturbine, aufweist/aufweisen.

Eine erfindungsgemäße Weiterbildung besteht auch darin, dass die erste Energiegewinnungsvorrichtung und/oder die brennstoffbefeuerte zweite Energiegewinnungsvorrichtung, insbesondere die/eine Gasturbine, mindestens eine den zugeführten Fluiddruckstrom und/oder zugeführte Luft verdichtende Verdichtungsstufe, insbesondere eine Verdichtungsturbine, aufweist/aufweisen.

Von Vorteil ist es gemäß Weiterbildung der Erfindung weiterhin, dass innerhalb der Rekuperatorvorrichtung, insbesondere Abhitzekessel, eine Rauchgasentstickungseinrichtung, vorzugsweise zwischen zwei Wärmetauscherstufen, ausgebildet und angeordnet ist, was die Erfindung ebenfalls vorsieht.

Von Vorteil ist es gemäß weiterer Ausgestaltung der Erfindung, wenn die Luftkonditioniervorrichtung derart ausgebildet ist, dass sie eine Verflüssigungseinheit und eine Verdampfungseinheit sowie vorzugsweise eine Kältespeichereinheit umfasst.

Insgesamt ist die erfindungsgemäße Vorrichtung schließlich dafür ausgelegt, dass mit ihr das erfindungsgemäße Verfahren durchgeführt werden kann, weshalb sie Mittel aufweist, die zur Durchführung eines Verfahrens nach einem der Ansprüche 1 - 9 eingerichtet sind.

Die Erfindung ist nachstehend anhand einer Zeichnung beispielhaft näher erläutert.

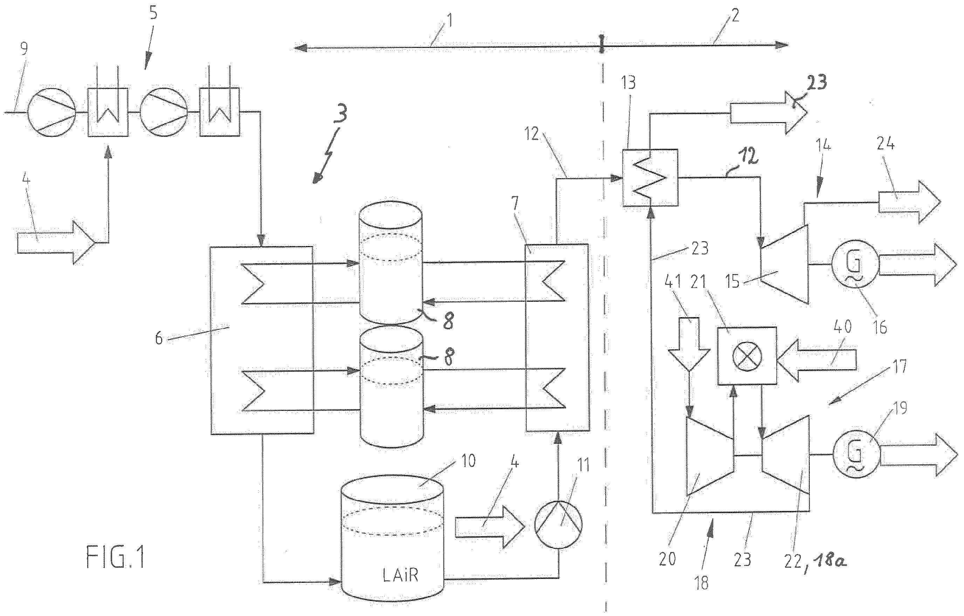

Diese zeigt in den Figuren 1-9 Ausführungsbeispiele der erfindungsgemäßen Vorrichtung zur Durchführung des erfindungsgemäßen Verfahrens in schematischer Darstellung.

In den Figuren 1-9 sind gleiche, analoge oder sich einander grundsätzlich entsprechende Elemente, Apparate, Vorrichtungen und Fluidströme mit identischen Bezugszeichen veranschaulicht und werden der Übersichtlichkeit halber nicht in sämtlichen Fällen erneut erläutert. Dies gilt umso mehr, als sich die einzelnen Ausführungsvarianten nach den Figuren 1-9 lediglich in Teilbereichen voneinander unterscheiden.

Die Figur 1 zeigt eine erfindungsgemäße Vorrichtung in Form einer Energiespeicheranlage 1 und einer Energiegewinnungsanlage 2. In der Energiespeicheranlage 1 wird in einem Energiespeicherzeitraum ein Luftverflüssigungsprodukt (LAIR) gebildet. Hierzu wird in einer Luftkonditioniervorrichtung 3, die eine mit Strom 4 betriebene Verdichtungseinrichtung 5, eine Verflüssigungseinheit 6 und eine Verdampfereinheit 7 mit zugeordnetem Kältespeicher 8 umtasst, ein Luftverflüssigungsprodukt (LAIR) aus der Verdichtereinrichtung 5 zugeführter Luft 9 hergestellt. Das Luftverflüssigungsprodukt (LAIR) wird in einer als Flüssigkeitsspeicher ausgebildeten Speichervorrichtung 10 (zwischen)gespeichert, so dass diese Speichereinheit 10 eine Luftverflüssigungsproduktspeichervorrichtung ausbildet. Um die in diesem Luftverflüssigungsprodukt (LAIR) gespeicherte Energie in der Energiegewinnungsanlage 2 wieder nutzen zu können, wird dieses in einem Energierückgewinnungszeitraum mit Hilfe einer als Pumpe 11 ausgebildeten Fördervorrichtung der Verdampfereinheit 7 zugeführt, nach deren Durchströmen das Luftverflüssigungsprodukt dann in Form eines "kalten" Fluiddruckstromes 12 mit einem Druck im Bereich zwischen 30 und 10 bar, vorzugsweise 30 und 90 bar, insbesondere 40 bis 70 bar, ganz besonders bevorzugt 55 - 75 bar, und Umgebungstemperatur vorliegt. Es ist hierbei auch möglich, dass das Luftverflüssigungsprodukt (LAIR) nicht in der Speichereinheit 10 (zwischen)gespeichert sondern unmittelbar nach seiner Erzeugung der Pumpe 11 zugeführt wird. Der "kalte" Fluiddruckstrom 12 wird durch eine Rekuperatorvorrichtung 13 hindurch zu einer ersten Energiegewinnungseinrichtung 14 gefördert. Im Ausführungsbeispiel nach der Figur 1 umfasst die erste Energiegewinnungsvorrichtung 14 eine erste Entspannungsstufe 15 mit angeschlossenem Generator 16, wobei die erste Entspannungsstufe 15 als Entspannungsturbine ausgebildet ist.

Die Energiegewinnungsanlage 2 umfasst weiterhin eine brennstoffbefeuerte zweite Energiegewinnungsvorrichtung 17, die als Gasturbineneinheit 18, insbesondere als offene Gasturbine 18a mit angeschlossenem Generator 19, ausgebildet ist. Die Gasturbineneinheit 18 weist eine Verdichtungsstufe 20, insbesondere eine Verdichtungsturbine, auf mittels welcher zugeführte Luft 41 verdichtet und einer Brennkammer 21 zugeführt wird. In der Brennkammer 21 wird die verdichtete Luft 41 mit zugeführtem Brennstoff, im Ausführungsbeispiel Erdgas 40, verbrannt und der dabei entstehende Abgasstrom wird auf eine zweite Entspannungsstufe 22, insbesondere eine Entspannungsturbine, der Gasturbineneinheit 18 geleitet. Das die zweite Entspannungsstufe 22 verlassende Rauchgas, das eine Temperatur von mehr als 400 °C, insbesondere eine Temperatur im Bereich von 450-500 °C, aufweist, wird als Rauchgasstrom 23 ebenfalls der Rekuperatorvorrichtung 13 zugeführt. In der Rekuperatorvorrichtung 13 erfolgt ein Wärmeaustausch zwischen dem Rauchgasstrom 23 und dem Fluiddruckstrom 12 derart, dass aus dem Rauchgasstrom 23 Wärmeenergie ausgekoppelt und in den Fluiddruckstrom 12 eingekoppelt wird. Nach Durchströmen der Rekuperatorvorrichtung 13, die in Form eines Abhitzekessels ausgebildet ist, weist der Fluiddruckstrom 12 eine Temperatur von mehr als 400 °C, vorzugsweise mehr als 450 °C, insbesondere eine Temperatur im Bereich von 500-550 °C, auf. Dieser nun hocherwärmte Fluiddruckstrom 12 wird der Entspannungsstufe 15 der ersten Energiegewinnungsvorrichtung 14 zugeführt und derart entspannt, dass die an die Umgebung abgegebene Luft 24 noch einen Druck von ≤ 0,2 bar aufweist. Bei diesem kombinierten Betrieb von erster Energiegewinnungsvorrichtung 14 und zweiter Energiegewinnungsvorrichtung 17 wird mittels beider Generatoren 16 und 19 Strom erzeugt.

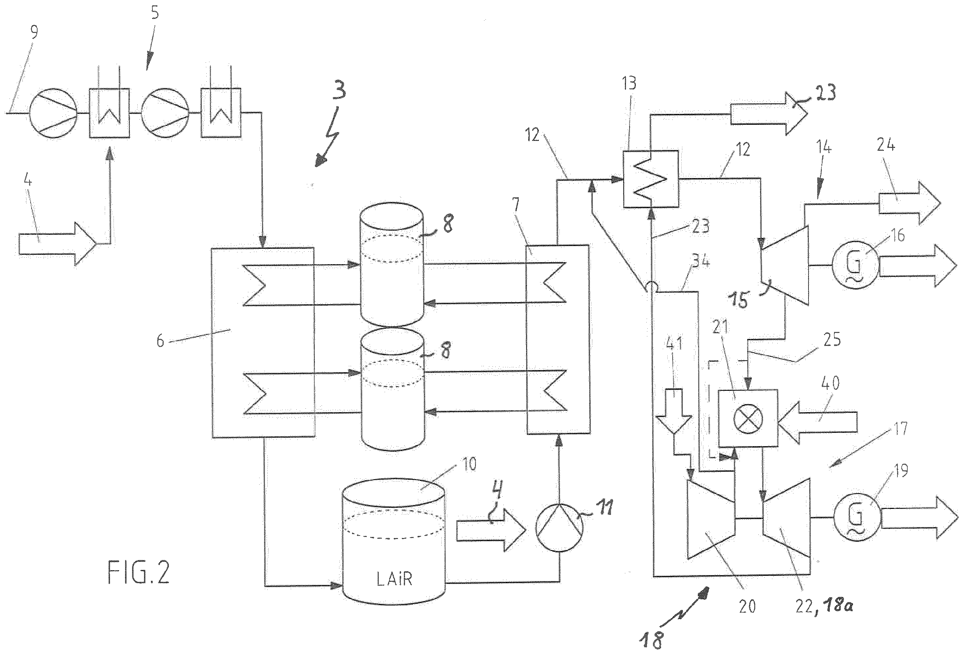

Bei der Ausführungsform nach der Fig. 2 wird im Unterschied zu der Ausführungsform nach der Fig. 1 aus der ersten Entspannungsstufe 15 der ersten Energiegewinnungsvorrichtung 14 ein Teilstrom 25 des Fluiddruckstromes 12 abgezweigt, nachdem der Fluiddruckstrom in der ersten Entspannungsstufe 15 auf einen Druck von > 10 bar, vorzugsweise einen Druck zwischen 10 bar und 25 bar, entspannt worden ist. Dieser Teilstrom 25 des Fluiddruckstromes wird der Brennkammer 21 der zweiten Energiegewinnungsvorrichtung 17 zugeführt. Zudem wird von dem in der Verdichtungsstufe 20 verdichteten Luftstrom der Luft 41, der am Ende der Verdichtungsstufe 20 eine Temperatur von ca. 450°C aufweist, ein Teilstrom 34 abgezweigt und dem Fluiddruckstrom 12 stromaufwärts der Rekuperatorvorrichtung 13 zugemischt, so dass dieser bereits vor Eintritt in die Rekuperatorvorrichtung 13 erwärmt wird. In diesem Fall kann der Teilstrom 25 dem der Brennkammer 21 zugeführten Restteilstrom der verdichteten Luft 41 auch vor deren Eintritt in die Brennkammer 21 zugemischt werden, wie dies in Fig. 2 gestrichelt angedeutet ist.

Die weitere Ausbildung ist wie bei der Ausführungsform nach der Fig. 1.

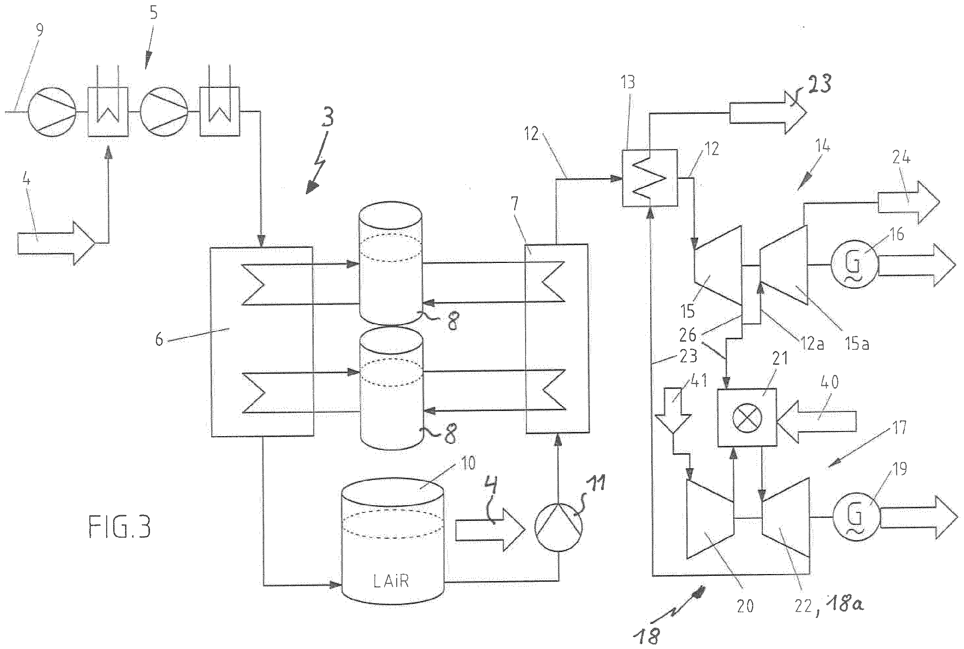

Die Ausführungsform nach der Fig. 3 unterscheidet sich gegenüber den vorhergehenden Ausführungsformen nun darin, dass die Entspannungsstufe der ersten Energiegewinnungsvorrichtung 14 zweistufig ausgebildet ist und die erste Entspannungsstufe 15 sowie eine dritte Entspannungsstufe 15a umfasst. Hier wird der Fluiddruckstrom 12 in der ersten Entspannungsstufe 15 auf einen Druck vun > 10 bar, vorzugsweise > 14 bar, entspannt und dann der dritten Spannungsstufe 15a zugeführt. Zwischen der ersten und dritten Entspannungsstufe 15, 15a wird ein Teilstrom 26 des Fluiddruckstromes 12 abgezweigt und der Brennkammer 21 der zweiten Energiegewinnungsvorrichtung 17 zugeführt. Der verbleibende Restteilstrom 12a des Fluiddruckstromes 12 wird der dritten Entspannungsstufe 15a der ersten Energiegewinnungsvorrichtung 14 zugeführt.

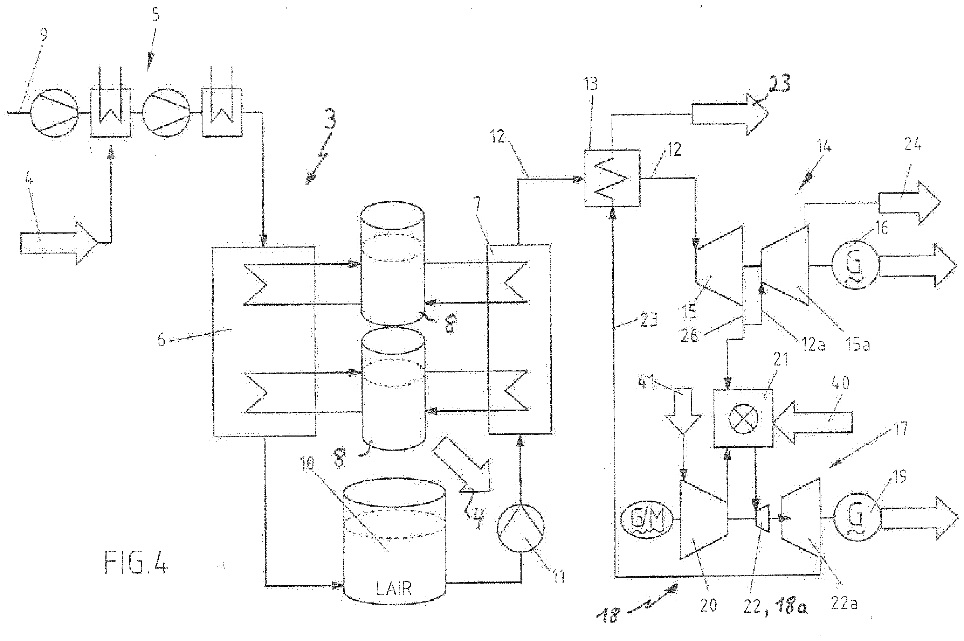

Die Ausführungsform nach der Fig. 4 unterscheidet sich von der nach der Fig. 3 lediglich darin, dass auch die Entspannungsstufe der zweiten Energiegewinnungsvorrichtung 17 zweistufig ausgebildet ist und die zweite Entspannungsstufe 22 und eine vierte Entspannungsstufe 22a umfasst.

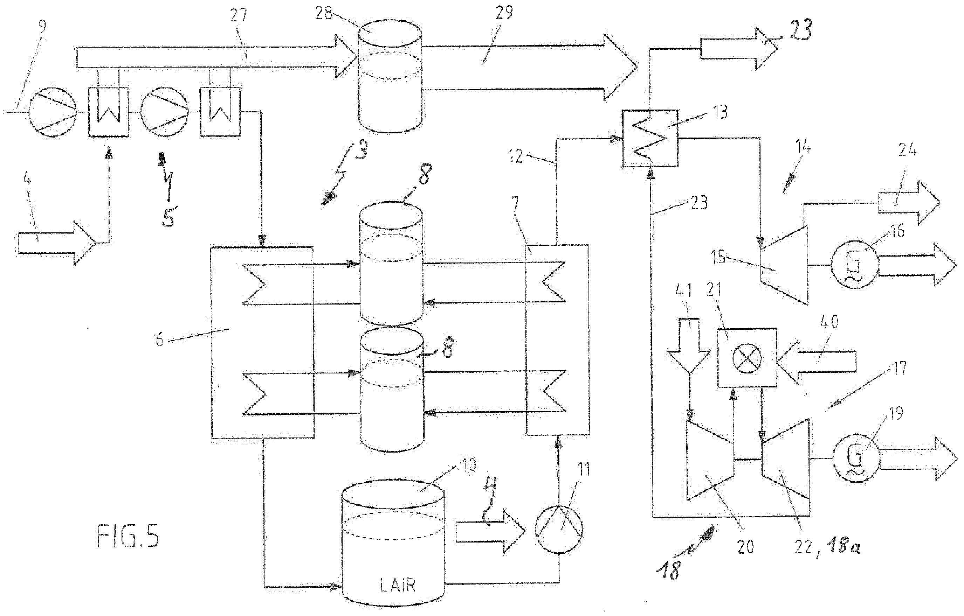

Die Ausführungsform nach der Fig. 5 soll verdeutlichen, dass die bei der Verdichtung der zugeführten Luft 9 in der Verdichtungseinrichtung 5 entstehende Verdichtungsabwärme 27 in einem Wärmespeicher 28 gespeichert und anschließend einem Fernwärmenetz und/oder einem Prozesswärmenetz 29 zugeführt werden kann.

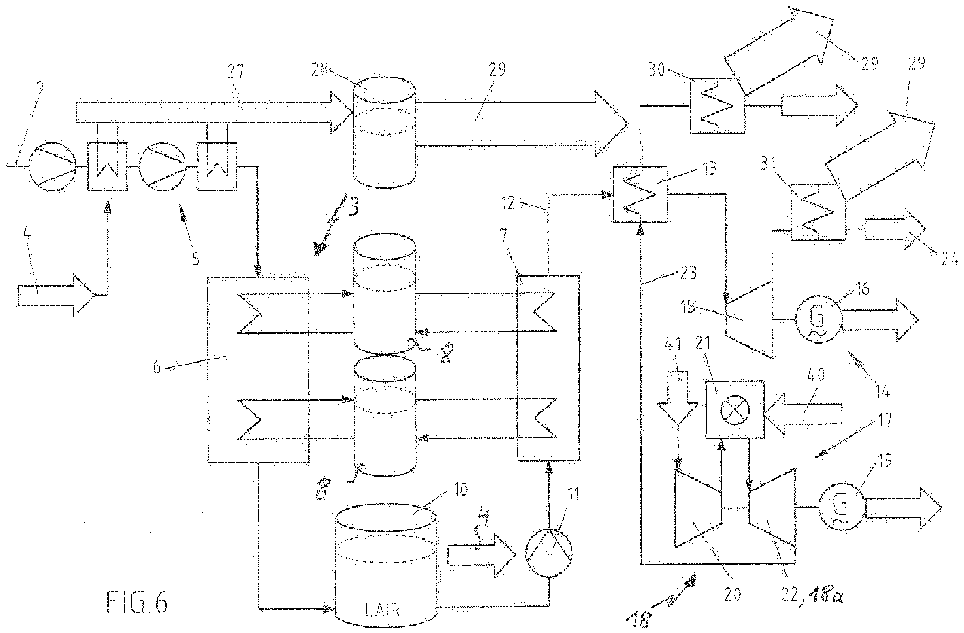

Die Fig. 6 verdeutlicht, dass auch stromabwärts der Rekuperatorvorrichtung 13 ein Wärmetauscher 30 angeordnet sein kann, mit welchem dem Rauchgasstrom 23 darin noch vorhandene Restwärme entnommen und ebenfalls dem Fernwärmenetz und/oder Prozesswärmenetz 29 zugeführt werden kann. Ebenso ist es möglich, die die erste Energiegewinnungsvorrichtung 14 verlassende Abluft 24 einem Wärmetauscher 31 zuzuführen, in welchem wiederum in der Abluft 24 noch vorhandene Wärmeenergie entkoppelt und dann dem Fernwärmenetz und/oder Prozesswärmenetz 29 zur Verfügung gestellt werden kann.

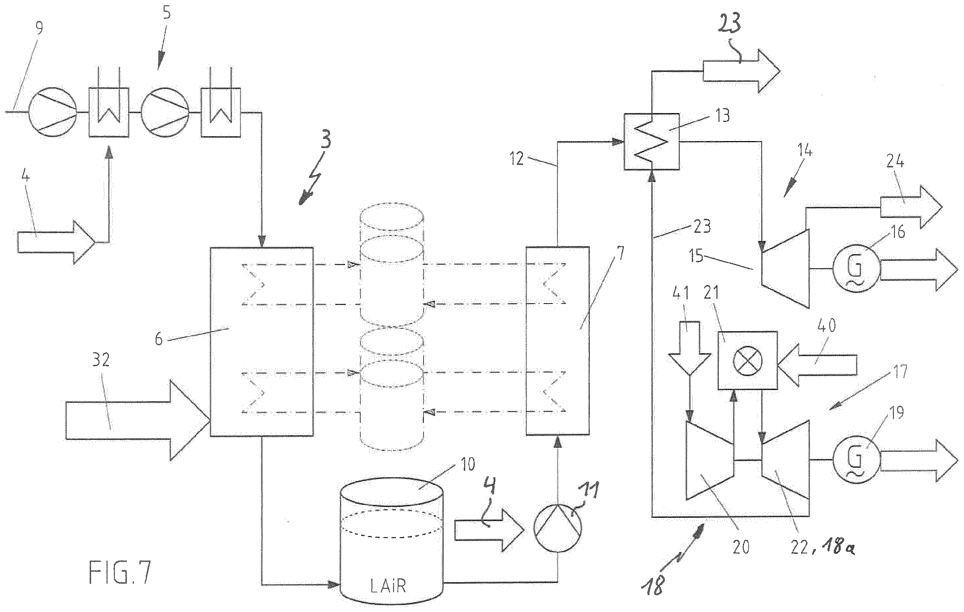

Die Fig. 7 zeigt, dass aus anderen Prozessen, insbesondere Verdampfungsprozessen, vorzugsweise aus der Verdampfung von Erdgas oder Liquid Natural Gas, stammende Kälte/Überschusskälte 32 der Luftkonditioniervorrichtung 3 zugeführt und hier insbesondere in der Verflüssigungseinheit 6 verwendet werden kann.

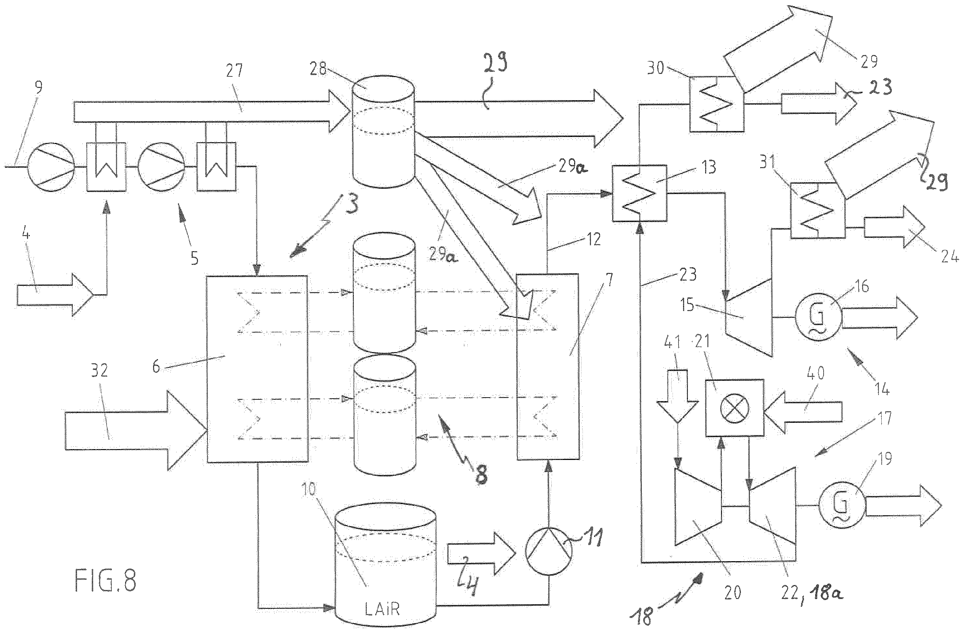

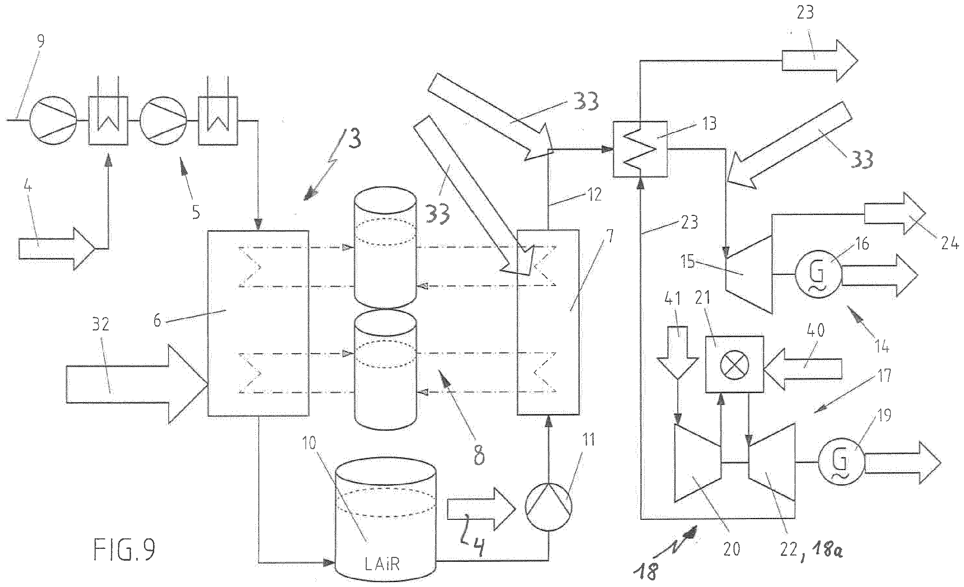

Während die Fig. 8 verdeutlicht, dass die in dem Wärmespeicher 28 gespeicherte Wärmeenergie in Form von Prozesswärme 29a auch der Verdampfereinheit 7 oder dem Fluiddruckstrom 12 zugeführt werden kann, zeigt schließlich die Fig. 9, dass ebenso Fremdwärme 33 Verwendung finden kann, um diese der Verdampfereinheit 7 und/oder dem Fluiddruckstrom 12 in Strömungsrichtung vor und/oder nach der Rekuperatorvorrichtung 13 zuzuführen.

Ein "Luftverflüssigungsprodukt" im Sinne der Erfindung ist jedes Produkt, das zumindest durch Verdichten, Abkühlen und anschließendes Entspannen von Luft in Form einer tiefkalten Flüssigkeit hergestellt werden kann. Insbesondere kann es sich bei einem Luftverflüssigungsprodukt um Flüssigluft, flüssigen Sauerstoff, flüssigen Stickstoff und/oder ein flüssiges Edelgas wie flüssiges Argon handeln. Die Begriffe "flüssiger Sauerstoff' bzw. "flüssiger Stickstoff' bezeichnen dabei jeweils auch eine tiefkalte Flüssigkeit, die Sauerstoff bzw. Stickstoff in einer Menge aufweist, die oberhalb derer atmosphärischer Luft liegt. Es muss sich dabei also nicht notwendigerweise um reine Flüssigkeiten mit hohen Gehalten von Sauerstoff bzw. Stickstoff handeln. Unter flüssigem Stickstoff wird also sowohl reiner oder im Wesentlichen reiner Stickstoff verstanden, als auch ein Gemisch aus verflüssigten Luftgasen, dessen Stickstoffgehalt höher als derjenige der atmosphärischen Luft ist. Beispielsweise weist dieses einen Stickstoffgehalt von mindestens 90, vorzugsweise mindestens 99 Molprozent auf.

Unter den Begriffen "Energiespeicherzeitraum" und "Energierückgewinnungszeitraum" werden insbesondere Zeiträume verstanden, die einander nicht überlappen. Dies bedeutet, dass die vorstehend und nachfolgend für den Energiespeicherzeitraum beschriebenen Maßnahmen typischerweise nicht während des Energierückgewinnungszeitraums durchgeführt werden und umgekehrt. Es kann jedoch auch vorgesehen sein, beispielsweise in einem weiteren Zeitraum zumindest einen Teil der für den Energiespeicherzeitraum beschriebenen Maßnahmen zeitgleich mit den für den Energierückgewinnungszeitraum beschriebenen Maßnahmen durchzuführen, beispielsweise um eine größere Kontinuität im Betrieb einer entsprechenden Anlage sicherzustellen. Beispielsweise kann auch in einem Energiespeicherzeitraum einer zur Energiegewinnung eingerichteten Einheit oder Energiegewinnungsanlage 2 ein Fluiddruckstrom 12 zugeführt und in dieser arbeitsleistend entspannt werden, beispielsweise um die hier verwendeten Verdichter ohne Stillstand betreiben zu können. Der Energiespeicherzeitraum und der Energierückgewinnungszeitraum entsprechen jeweils einem Betriebs- bzw. Verfahrensmodus einer entsprechenden Anlage bzw. eines entsprechenden Verfahrens.

## Patentansprüche

1. Verfahren zur Speicherung und Rückgewinnung von Energie, bei welchem in einem Energiespeicherzeitraum ein Luftverflüssigungsprodukt (LAIR) gebildet und in einem Energierückgewinnungszeitraum unter Verwendung zumindest eines Teils des Luftverflüssigungsproduktes (LAIR) ein Fluiddruckstrom (12) gebildet und in mindestens einer Energiegewinnungsvorrichtung (14, 17) arbeitsleistend entspannt wird , wobei in dem Energiespeicherzeitraum das Luftverflüssigungsprodukt (LAIR) durch eine unter Energiezufuhr betriebene Verdichtung von Luft in einer Luftkonditioniervorrichtung (3) als flüssiges Medium gewonnen, gewünschtenfalls in kaltem Zustand in einer als Flüssigkeitsspeicher ausgebildeten Speichereinrichung (10) gespeichert und in dem Energierückgewinnungszeitraum einer Verdampfereinheit (7) zugeführt wird und wobei das Luftverflüssigungsprodukt (LAIR) mindestens in dem Energierückgewinnungszeitraum nach einer Druckerhöhung als der Fluiddruckstrom (12) in der mindestens einen Energiegewinnungsvorrichtung (14, 17) arbeitsleistend entspannt wird, wobei der Fluiddruckstrom (12) in einer ersten Energiegewinnungsvorrichtung (14) entspannt und stromaufwärts dieser ersten Energiegewinnungsvorrichtung (14) durch eine Rekuperatorvorrichtung (13) geleitet wird, in welcher in den Fluiddruckstrom (12) aus einem der Rekuperatorvorrichtung (13) zugeführten Rauchgasstrom (23) ausgekoppelte Wärmeenergie eingekoppelt wird, wobei der Rauchgasstrom (23) von einer brennstoffbefeuerten zweiten Energiegewinnungsvorrichtung (17) der Rekuperatorvorrichtung (13) zugeführt wird,
**dadurch gekennzeichnet,**
**dass** der Fluiddruckstrom (12) in einer ersten Entspannungsstufe (15) der ersten Energiegewinnungsvorrichtung (14) auf einen Druck von ≥ 10 bar entspannt, dann ein Teilstrom (25, 26) abgezweigt und der brennstoffbefeuerten zweiten Energiegewinnungsvorrichtung (17) zugeführt wird.

2. Verfahren nach Anspruch 1, **dadurch gekennzeichnet, dass** der Fluiddruckstrom (12) dem Rekuperator (13) mit einem Druck von 30 - 100 bar zugeführt und dort mittels der eingekoppelten Wärmeenergie auf eine Temperatur von > 400 °C erwärmt wird.

3. Verfahren nach Anspruch 1 oder 2, **dadurch gekennzeichnet, dass** der Fluiddruckstrom (12) in mindestens einer Entspannungsstufe (15, 15a) der ersten Energiegewinnungsvorrichtung (14) auf einen Druck von ≤ 0,2 bar entspannt wird.

4. Verfahren nach einem oder mehreren der vorhergehenden Ansprüche, **dadurch gekennzeichnet, dass** der Fluiddruckstrom (12) in der ersten Entspannungsstufe (15) der ersten Energiegewinnungsvorrichtung (14) auf einen Druck von ≥ 10 bar entspannt wird, dann der Teilstrom (26) abgezweigt und der brennstoffbefeuerten zweiten Energiegewinnungsvorrichtung (17) zugeführt und der verbleibende Restteilstrom (12a) einer dritten Entspannungsstufe (15a) der ersten Energiegewinnungsvorrichtung (14) zugeführt wird.

5. Verfahren nach einem der vorhergehenden Ansprüche, **dadurch gekennzeichnet, dass** der der zweiten Energiegewinnungsvorrichtung (17) zugeführte Teilstrom (25, 26) des Fluiddruckstroms (12) 2 - 40 % des Massenstromes an Luft entspricht, der beim Betrieb der zweiten Energiegewinnungsvorrichtung (17) durch mindestens eine Verdichterstufe (20) der zweiten Energiegewinnungsvorrichtung (17) verdichtet wird.

6. Verfahren nach einem der vorhergehenden Ansprüche, **dadurch gekennzeichnet, dass** der Rauchgasstrom (23) durch eine eine Entstickung bewirkende Rekuperatorvorrichtung (13) geleitet wird.

7. Verfahren nach einem der vorhergehenden Ansprüche, **dadurch gekennzeichnet, dass** dem der Rekuperatorvorrichtung (13) zugeführten Rauchgasstrom (23) vor Eintritt in die Rekuperatorvorrichtung (13) ein Umgebungstemperatur aufweisender Frischluftstrom in einer solchen Menge zugeführt wird, dass der Rauchgasstrom (23) vor Eintritt in die Rekuperatorvorrichtung (13) auf eine Temperatur zwischen 250°C und 500°C gekühlt wird und/oder dass der Rauchgasstrom (23) vor Eintritt in die Rekuperationsvorrichtung (13) mittels einer Wassereinspritzung auf eine Temperatur von 250°C bis 500°C gekühlt wird.

8. Verfahren nach einem oder mehreren der vorhergehenden Ansprüche, **dadurch gekennzeichnet, dass** die bei der Verdichtung (5) von Luft (9) in der Luftkonditioniervorrichtung (3) entstehende Verdichtungsabwärme (27) gespeichert (28) und/oder als Fernwärme und/oder als Prozesswärme (29) zur Verfügung gestellt wird, und/oder, dass aus dem die erste Energiegewinnungsvorrichtung (14) verlassenden Abluftstrom (24) und/oder dem die Rekuperatorvorrichtung (13) verlassenden Rauchgasstrom (23) Wärmeenergie ausgekoppelt und als Fernwärme (29) und/oder Prozesswärme (29) zur Verfügung gestellt wird.

9. Verfahren nach einem der vorhergehenden Ansprüche, **dadurch gekennzeichnet, dass** der eine Verflüssigungseinheit (6) und eine Verdampfereinheit (7) umfassenden Luftkonditioniervorrichtung (3) bei anderen Verdampfungsprozessen entstehende Kälte (32) zugeführt wird.

10. Vorrichtung, insbesondere zur Durchführung eines Verfahrens nach einem der Ansprüche 1 - 9, die zum Speichern und Rückgewinnen von Energie durch Bildung eines Luftverflüssigungsproduktes (LAIR) in einem Energiespeicherzeitraum und zum Erzeugen und arbeitsleistenden Entspannen eines unter Verwendung zumindest eines Teiles des Luftverflüssigungsprodukts (LAIR) gebildeten Fluiddruckstroms (12) in einem Energierückgewinnungszeitraum eingerichtet ist, umfassend eine unter Energiezufuhr betreibbare Luftkonditioniervorrichtung (3), mittels welcher das Luftverflüssigungsprodukt (LAIR) durch Verdichtung von Luft als flüssiges Medium erzeugbar ist, vorzugsweise eine Luftverflüssigungsproduktspeichervorrichtung (10), eine das Luftverflüssigungsprodukt (LAIR) druckerhöhend zu dem Fluiddruckstrom (12) verdichtende Fördervorrichtung (11) und mindestens eine mit der Fördervorrichtung (11) in Leitungsverbindung stehende und den Fluiddruckstrom (12) arbeitsleistend entspannende Energiegewinnungsvorrichtung (14, 17), wobei in der Leitungsverbindung in Strömungsrichtung des Fluiddruckstroms (12) stromaufwärts einer ersten, von dem Fluiddruckstrom (12) durchströmten Energiegewinnungsvorrichtung (14) eine von dem Fluiddruckstrom (12) durchströmte Rekuperatorvorrichtung (13) angeordnet ist, in welcher in den Fluiddruckstrom (12) aus einem der Rekuperatorvorrichtung (13) zugeführten Rauchgasstrom (23) ausgekoppelte Wärmeenergie einkoppelbar ist, wobei die Rekuperatorvorrichtung (13) in einer den Rauchgasstrom (23) zuführenden Leitungsverbindung mit einer brennstoffbefeuerten zweiten Energiegewinnungsvorrichtung (17) steht,
**dadurch gekennzeichnet,**
**dass** die erste und die zweite Energiegewinnungsvorrichtung (14, 17) in einen Teilstrom (25, 26) des Fluiddruckstroms (12) von der ersten Energiegewinnungsvorrichtung (14) zu der brennstoffbefeuerten zweiten Energiegewinnungsvorrichtung (17) zuführender Leitungsverbindung miteinander stehen.

11. Vorrichtung nach Anspruch 10, **dadurch gekennzeichnet, dass** die erste Energiegewinnungsvorrichtung (14) und/oder die brennstoffbefeuerte zweite Energiegewinnungsvorrichtung (17) als Generatorturbine ausgebildet ist/sind.

12. Vorrichtung nach Anspruch 10 oder 11, **dadurch gekennzeichnet, dass** die erste Energiegewinnungsvorrichtung (14) und/oder die brennstoffbefeuerte zweite Energiegewinnungsvorrichtung (17) mindestens eine den zugeführten Fluiddruckstrom (12) entspannende Entspannungsstufe (15, 22) aufweist/aufweisen, und/oder mindestens eine den zugeführten Fluiddruckstrom (12) und/oder zugeführte Luft (41) verdichtende Verdichtungsstufe (20) aufweist/aufweisen.

13. Vorrichtung nach einem oder mehreren der Ansprüche 10 bis 12, **dadurch gekennzeichnet, dass** innerhalb der Rekuperatorvorrichtung (13) eine Rauchgasentstickungseinrichtung ausgebildet und angeordnet ist.

14. Vorrichtung nach einem oder mehreren der Ansprüche 10 bis 13, **dadurch gekennzeichnet, dass** die Luftkonditioniervorrichtung (3) eine Verflüssigungseinheit (6) und eine Verdampfungseinheit (7) sowie vorzugsweise eine Kältespeichereinheit (8) umfasst.

15. Vorrichtung nach einem der Ansprüche 10 bis 14, **dadurch gekennzeichnet, dass** sie Mittel aufweist, die zur Durchführung eines Verfahrens nach einem der Ansprüche 1 bis 9 eingerichtet sind.

## Claims

1. A method of storing and recovering energy, in which an air liquefaction product (LAIR) is formed in an energy storage period and a fluid pressure stream (12) is formed using at least a portion of the air liquefaction product (LAIR) in an energy recovery period and is expanded to perform work in at least one energy generation device (14, 17),
wherein in the energy storage period the air liquefaction product (LAIR) is obtained as liquid medium by compression of air, operated with supply of energy, in an air conditioning device (3), if desired is stored in the cold state in a storage unit (10) designed as a liquid storage means, and is sent to an evaporator unit (7) in the energy storage period
and wherein the air liquefaction product (LAIR) is expanded to perform work at least in the energy recovery period after a pressure increase as the fluid pressure stream (12) in the at least one energy generation device (14, 17), wherein the fluid pressure stream (12) is expanded in a first energy generation device (14) and, upstream of this first energy generation device (14), is passed through a recuperator device (13) in which heat energy abstracted from a flue gas stream (23) fed to the recuperator device (13) is injected into the fluid pressure stream (12), the flue gas stream (23) being fed to the recuperator device (13) from a fuel-fired second energy generation device (17),
**characterized in that**
the fluid pressure stream (12) is expanded in a first expansion stage (15) of the first energy generation device (14) to a pressure of ≥ 10 bar, then a substream (25, 26) is branched off and fed to the fuel-fired second energy generation device (17).

2. The method as claimed in claim 1, **characterized in that** the fluid pressure stream (12) is fed to the recuperator (13) at a pressure of 30-100 bar and is heated therein by means of the heat energy injected to a temperature of > 400°C.

3. The method as claimed in claim 1 or 2, **characterized in that** the fluid pressure stream (12) is expanded in at least one expansion stage (15, 15a) of the first energy generation device (14) to a pressure of ≤ 0.2 bar.

4. The method as claimed in one or more of the preceding claims, **characterized in that** the fluid pressure stream (12) is expanded in the first expansion stage (15) of the first energy generation device (14) to a pressure of ≥ 10 bar, then the substream (26) is branched off and fed to the fuel-fired second energy generation device (17), and the remaining residual substream (12a) is fed to a third expansion stage (15a) of the first energy generation device (14).

5. The method as claimed in any of the preceding claims, **characterized in that** the substream (25, 26) of the fluid pressure stream (12) fed to the second energy generation device (17) corresponds to 2%-40% of the mass flow of air which is compressed by at least one compressor stage (20) of the second energy generation device (17) in operation of the second energy generation device (17).

6. The method as claimed in any of the preceding claims, **characterized in that** the flue gas stream (23) is passed through a recuperator device (13) which brings about denoxing.

7. The method as claimed in any of the preceding claims, **characterized in that** the flue gas stream (23) fed to the recuperator device (13), prior to entry into the recuperator device (13), is supplied with a fresh air stream at ambient temperature in such an amount that the flue gas stream (23) is cooled prior to entry into the recuperator device (13) to a temperature between 250°C and 500°C, and/or that the flue gas stream (23), prior to entry into the recuperator device (13), is cooled by means of sprayed introduction of water to a temperature of 250°C to 500°C.

8. The method as claimed in one or more of the preceding claims, **characterized in that** the waste heat of compression (27) that arises in the compression (5) of air (9) in the air conditioning device (3) is stored (28) and/or provided as district heat and/or as process heat (29), and/or that heat energy is abstracted from the output air stream (24) leaving the first energy generation device (14) and/or from the flue gas stream (23) leaving the recuperator device (13) and made available as district heat (29) and/or as process heat (29).

9. The method as claimed in any of the preceding claims, **characterized in that** the air conditioning device (3) comprising a liquefaction unit (6) and an evaporator unit (7) is supplied with cooling energy (32) that arises in other evaporation processes.

10. A device, especially for performance of a method as claimed in any of claims 1-9, which is set up for storage and recovery of energy by formation of an air liquefaction product (LAIR) in an energy storage period and for production and work-performing expansion of a fluid pressure (12) formed using at least a portion of the air liquefaction product (LAIR) in an energy recovery period, comprising an air conditioning device (3) that can be operated with supply of energy, by means of which the air liquefaction product (LAIR) can be produced as liquid medium by compression of air, preferably an air liquefaction product storage device (10), a conveying device (11) that compresses the air liquefaction product (LAIR) in a pressure-increasing manner to give the fluid pressure stream (12) and at least one energy generation device (14, 17) which is connected by conduits to the conveying device (11) and expands the fluid pressure stream (12) to perform work, wherein in the conduit connection upstream of a first energy generation device (14) through which the fluid pressure stream (12) flows in flow direction of the fluid pressure stream (12), a recuperator device (13) is disposed through which the fluid pressure stream (12) flows, in which heat energy abstracted from a flue gas stream (23) fed to the recuperator device (13) can be injected into the fluid pressure stream (12), the recuperator device (13) being within a conduit connection that supplies the flue gas stream (23) to a fuel-fired second energy generation device (17), **characterized in that**
the first and second energy generation devices (14, 17) are in conduit connection supplying a substream (25, 26) of the fluid pressure stream (12) from the first energy generation device (14) to the fuel-fired second energy generation device (17).

11. The device as claimed in claim 10, **characterized in that** the first energy generation device (14) and/or the fuel-fired second energy generation device (17) take(s) the form of generator turbine(s).

12. The device as claimed in claim 10 or 11, **characterized in that** the first energy generation device (14) and/or the fuel-fired second energy generation device (17) have/has at least one expansion stage (15, 22) that expands the fluid pressure stream (12) supplied, and/or have/has at least one compression stage (20) that compresses the fluid pressure stream (12) supplied and/or air (41) supplied.

13. The device as claimed in one or more of claims 10 to 12, **characterized in that** a flue gas denoxing unit is configured and arranged within the recuperator device (13).

14. The device as claimed in one or more of claims 10 to 13, **characterized in that** the air conditioning device (3) comprises a liquefaction unit (6) and an evaporation unit (7) and preferably a cooling energy storage unit (8).

15. The device as claimed in any of claims 10 to 14, **characterized in that** it has means that have been set up to conduct a process as claimed in any of claims 1 to 9.

## Revendications

1. Procédé d'accumulation et de récupération d'énergie, dans lequel, dans une période d'accumulation d'énergie, un produit de liquéfaction d'air (LAIR) est formé et, dans une période de récupération d'énergie, à l'aide d'au moins une partie du produit de liquéfaction d'air (LAIR), un flux de pression de fluide (12) est formé et est détendu en générant un travail dans au moins un dispositif d'extraction d'énergie (14, 17),
de sorte que, dans la période d'accumulation d'énergie, le produit de liquéfaction d'air (LAIR) soit extrait sous la forme d'un milieu liquide par compression, effectuée par un apport d'énergie, de l'air dans un dispositif de conditionnement d'air (3), soit éventuellement stocké dans un état froid dans un dispositif d'accumulation (10) conçu comme un accumulateur de liquide et soit introduit, dans la période de récupération d'énergie, dans une unité d'évaporation (7), et de sorte que le produit de liquéfaction d'air (LAIR) soit détendu en générant un travail au moins dans la période de récupération d'énergie après une augmentation de pression sous la forme du flux de pression de fluide (12) dans l'au moins un dispositif d'extraction d'énergie (14, 17), le flux de pression de fluide (12) étant détendu dans un premier dispositif d'extraction d'énergie (14) et étant conduit, en amont de ce premier dispositif d'extraction d'énergie (14), à travers un dispositif récupérateur (13), dans lequel, dans le flux de pression de fluide (12), une énergie thermique dégagée à partir d'un flux de gaz de fumée (23) introduit dans le dispositif récupérateur (13), est introduite, le flux de gaz de fumée (23) provenant d'un deuxième dispositif d'extraction d'énergie (17) alimenté en carburant étant introduit dans le dispositif récupérateur (13),
**caractérisé en ce que**
le flux de pression de fluide (12) est détendu, dans un premier étage de détente (15) du premier dispositif d'extraction d'énergie (14), à une pression ≥ 10 bar, puis qu'un flux partiel (25, 26) est dérivé et introduit dans le deuxième dispositif d'extraction d'énergie (17) alimenté en carburant.

2. Procédé selon la revendication 1, **caractérisé en ce que** le flux de pression de fluide (12) est introduit dans le récupérateur (13) avec une pression de 30 à 100 bar et y est chauffé au moyen de l'énergie thermique introduite à une température > 400°C.

3. Procédé selon la revendication 1 ou 2, **caractérisé en ce que** le flux de pression de fluide (12) est détendu, dans au moins un étage de détente (15, 15a) du premier dispositif d'extraction d'énergie (14), à une pression ≤ 0,2 bar.

4. Procédé selon l'une ou plusieurs des revendications précédentes, **caractérisé en ce que** le flux de pression de fluide (12) est détendu dans le premier étage de détente (15) du premier dispositif d'extraction d'énergie (14) à une pression ≥ 10 bar puis que le flux partiel (26) est dérivé et introduit dans le deuxième dispositif d'extraction d'énergie (17) alimenté en carburant et le flux partiel restant (12a) est introduit dans un troisième étage de détente (15a) du premier dispositif d'extraction d'énergie (14).

5. Procédé selon l'une des revendications précédentes, **caractérisé en ce que** le flux partiel (25, 26) du flux de pression de fluide (12), introduit dans le deuxième dispositif d'extraction d'énergie (17), représente 2 à 40 % du flux massique d'air, qui est comprimé lors du fonctionnement du deuxième dispositif d'extraction d'énergie (17) à l'aide d'au moins un étage de compression (20) du deuxième dispositif d'extraction d'énergie (17).

6. Procédé selon l'une ou plusieurs des revendications précédentes, **caractérisé en ce que** le flux de gaz de fumée (23) est conduit à travers un dispositif récupérateur (13) réalisant une dénitration.

7. Procédé selon l'une des revendications précédentes, **caractérisé en ce que**, au flux de gaz de fumée (23) introduit dans le dispositif récupérateur (13), avant l'entrée dans le dispositif récupérateur (13), est ajouté un flux d'air frais présentant une température ambiante dans une quantité telle que le flux de gaz de fumée (23) soit refroidi, avant l'entrée dans le dispositif récupérateur (13), à une température comprise entre 250°C et 500°C et/ou **en ce que** le flux de gaz de fumée (23) est refroidi, avant l'entrée dans le dispositif récupérateur (13), au moyen d'une injection d'eau, à une température comprise entre 250°C et 500°C.

8. Procédé selon l'une ou plusieurs des revendications précédentes, **caractérisé en ce que** la chaleur de compression (27) dégagée lors de la compression (5) de l'air (9) dans le dispositif de conditionnement d'air (3) est accumulée (28) et/ou est mise à disposition en tant que chauffage urbain et/ou que chaleur industrielle (29) et/ou **en ce que**, à partir du flux de sortie d'air (24) quittant le premier dispositif d'extraction d'énergie (14) et/ou du flux de gaz de fumée (23) quittant le dispositif récupérateur (13), de l'énergie thermique est extraite et mise à disposition en tant que chauffage urbain (29) et/ou en tant que chaleur industrielle (29).

9. Procédé selon l'une des revendications précédentes, **caractérisé en ce que**, dans le dispositif de conditionnement d'air (3), comprenant une unité de liquéfaction (6) et une unité d'évaporation (7), est introduit un froid (32) résultant d'autres processus d'évaporation.

10. Dispositif, plus particulièrement pour l'exécution d'un procédé selon l'une des revendications 1 à 9, qui est conçu pour l'accumulation et la récupération d'énergie par la formation d'un produit de liquéfaction d'air (LAIR) dans une période d'accumulation d'énergie et pour la production et la détente générant un travail d'un flux de pression de fluide (12) formé à l'aide d'au moins une partie du produit de liquéfaction d'air (LAIR) dans une période de récupération d'énergie, comprenant un dispositif de conditionnement d'air (3) pouvant fonctionner à l'aide d'un apport d'énergie, au moyen duquel le produit de liquéfaction d'air (LAIR) peut être produit par la compression de l'air sous la forme d'un milieu liquide, de préférence un dispositif d'accumulation de produit de liquéfaction d'air (10), un dispositif de convoyage (11) comprimant le produit de liquéfaction d'air (LAIR) par augmentation de la pression jusqu'au flux de pression de fluide (12) et au moins un dispositif d'extraction d'énergie (14, 17) relié, à l'aide d'une liaison par conduite, avec le dispositif de convoyage (11) et détendant le flux de pression de fluide (12) en générant un travail, de sorte que, dans la liaison par conduite, dans le sens d'écoulement du flux de pression de fluide (12), en amont d'un premier dispositif d'extraction d'énergie (14) traversé par le flux de pression de fluide (12), soit disposé un dispositif récupérateur (13) traversé par le flux de pression de fluide (12), dans lequel l'énergie thermique dégagée à partir d'un flux de gaz de fumée (23) introduit dans le dispositif récupérateur (13) peut être introduite dans le flux de pression de fluide (12), le dispositif récupérateur (13) étant relié, à l'aide d'une liaison par conduite introduisant le flux de gaz de fumée (23), avec un deuxième dispositif d'extraction d'énergie (17) alimenté en carburant,
**caractérisé en ce que**
les premier et deuxième dispositifs d'extraction d'énergie (14, 17) sont reliés entre eux à l'aide d'une liaison par conduite introduisant un flux partiel (25, 26) du flux de pression de fluide (12), du premier dispositif d'extraction d'énergie (14) vers le deuxième dispositif d'extraction d'énergie (17) alimenté en carburant.

11. Dispositif selon la revendication 10, **caractérisé en ce que** le premier dispositif d'extraction d'énergie (14) et/ou le deuxième dispositif d'extraction d'énergie (17) alimenté en carburant est/sont conçu(s) comme une turbine génératrice.

12. Dispositif selon la revendication 10 ou 11, **caractérisé en ce que** le premier dispositif d'extraction d'énergie (14) et/ou le deuxième dispositif d'extraction d'énergie (17) alimenté en carburant comprend/comprennent au moins un étage de détente (15, 22) détendant le flux de pression de fluide (12) et/ou au moins un étage de compression (20) comprimant le flux de pression de fluide (12) introduit et/ou l'air (41) introduit.

13. Dispositif selon l'une ou plusieurs des revendications 10 à 12, **caractérisé en ce que**, à l'intérieur du dispositif récupérateur (13) est réalisé et disposé un dispositif de dénitration du gaz de fumée.

14. Dispositif selon l'une ou plusieurs des revendications 10 à 13, **caractérisé en ce que** le dispositif de conditionnement d'air (3) comprend une unité de liquéfaction (6) et une unité d'évaporation (7) ainsi que, de préférence, une unité d'accumulation de froid (8).

15. Dispositif selon l'une des revendications 10 à 14, **caractérisé en ce qu'**il comprend des moyens conçus pour l'exécution d'un procédé selon l'une des revendications 1 à 9.
